# EUROPÄISCHE PATENTSCHRIFT

(11) **EP 0 710 330 B1**
(45) Veröffentlichungstag und Bekanntmachung des Hinweises auf die Patenterteilung: **01.07.1998**
(21) Anmeldenummer: 94921657.6
(22) Anmeldetag: 19.07.1994
(51) Int. Cl.: F16D 23/06

(54) **GETRIEBESCHALTUNG MIT SYNCHRONISIEREINRICHTUNG**
GEARBOX SHIFT SYSTEM WITH A SYNCHRONISING ARRANGEMENT
SYSTEME DE CHANGEMENT DE VITESSES AVEC DISPOSITIF DE SYNCHRONISATION

(30) Priorität: 23.07.1993 DE 4324815
(43) Veröffentlichungstag der Anmeldung: 08.05.1996
(73) Patentinhaber: ZF FRIEDRICHSHAFEN Aktiengesellschaft, 88038 Friedrichshafen (DE)
(72) Erfinder: BAILLY, Gerhard, D-88046 Friedrichshafen (DE)
(86) Internationale Anmeldenummer: EP9402371
(87) Internationale Veröffentlichungsnummer: WO9503495

(56) Entgegenhaltungen:
- DE-B- 2 754 382
- DE-C- 680 423
- GB-A- 2 184 177
- ZF-B-Sperrsynchronisierung Druckschrift 42290/R, 2964-367 März 1967

## Beschreibung

Die Erfindung betrifft eine Getriebeschaltung mit Sperrsynchronisierung nach dem Oberbegriff des Anspruchs 1.

Für die Übertragung der Antriebsleistung und die Anpassung des Motordrehmomentes an den Zugkraftbedarf eines Fahrzeuges werden heute praktisch ausschließlich mehrstufige Zahnradgetriebe eingesetzt.

Die Getriebeschaltung kann mit Hilfe einer Synchronisiereinrichtung erheblich vereinfacht werden. Beim Synchronisieren wird die Drehzahlanpassung der miteinander zu verbindenden Getriebeelemente selbsttätig oder gesteuert durchgeführt, um so das Doppelkuppeln beim Hochschalten bzw. das Doppelkuppeln mit Zwischengasgeben beim Rückschalten zu vermeiden. Die Fahrsicherheit wird deutlich erhöht, da der Gangwechsel auch in kritischen Fahrsituationen schnell, sicher und auch geräuschlos möglich ist, beispielsweise kann der rechte Fuß des Fahrers beim Bergabfahren während einer Rückschaltung auf der Bremse bleiben.

Eine Synchronisiereinrichtung hat folgende Aufgaben zu erfüllen:
- Drehzahlanpassung von zwei unterschiedlich schnell rotierenden Getriebeelementen und der damit verbundenen Teile so, daß sie ohne Ratschgeräusch formschlüssig miteinander verbunden werden können;
- Sperren der formschlüssigen Verbindung bis zum Gleichlauf der zu verbindenden Getriebeelemente, um Ratschen und Beschädigungen der formschlüssigen Schaltelemente zu verhindern;
- Lösen der Sperre im Augenblick des Gleichlaufs;
- Drehzahlanpassung innerhalb kürzester Zeit und mit möglichst geringen Schaltkräften;
- Betriebssicherheit auch unter ungünstigen Umständen, wie beispielsweise bei kaltem, zähem Getriebeöl oder bei extrem schnellem Durchreißen der Gänge.

In den heutigen, synchronisierten Fahrzeuggetrieben werden überwiegend Synchronisiereinrichtungen für jeden einzelnen Gang eingesetzt.

Weite Verbreitung hat dabei die Sperrsynchronisierung mit Konus gefunden. Bei diesem System werden konische Reibkegel für die kraftschlüssige Drehzahlanpassung der zu verbindenden Getriebeelemente eingesetzt. Diese Art der Synchronisiereinrichtung findet sowohl in Personenwagen- als auch in Nutzfahrzeuggetrieben Verwendung.

Eine solche Sperrsynchronisierung ist beispielsweise bekanntgeworden aus "ZF-B-Sperrsynchronisierung"-Druckschrift 42290/R 2964-367 vom März 1967.

Die dort beschriebene Sperrsynchronisierung ist so ausgeführt, daß der mit einer Außenverzahnung versehene Synchronring beim Anpressen an den Reibkegel des Kupplungskörpers eine durch Anschläge am Synchronkörper begrenzte Drehbewegung ausführt. Diese Verdrehung hat zur Folge, daß sich die angeschrägten Zahnstirnflächen des Synchronringes gegen die der Schiebemuffe pressen und somit ein Weiterbewegen der Muffe verhindern. Erst wenn die Kegelreibflächen den Gleichlauf der zu kuppelnden Teile herbeigeführt haben, bewirkt der anhaltende Druck der Schiebemuffe ein Zurückdrehen des Synchronringes. Die Sperre ist damit gelöst und die Schiebemuffe wird in die Verzahnung des Kupplungskörpers eingeschoben.

Im Leerlauf befindet sich die Schiebemuffe in axialer Mittelstellung. Die Rastenbolzen werden durch Federn in Rasten der Schiebemuffe gedrückt. Die Losräder können sich frei auf ihrer Welle drehen. Der Drehzahlunterschied zwischen Synchronring und Kupplungskörper und das Schleppmoment zwischen ihren Reibflächen bewirken, daß der Synchronring am Verdrehanschlag der Schiebemuffe anliegt. Die angeschrägten Zahnstirnflächen von Schiebemuffe und Synchronring stehen einander gegenüber.

In der Sperrstellung hat die Schiebemuffe zunächst über die Rastenbolzen und Druckstücke den Synchronring auf den Reibkonus des Kupplungskörpers geschoben. Die Zahnstirnflächen haben damit die Weiterleitung der Schaltkraft von der Schiebemuffe direkt an den Synchronring übernommen. Solange ein Drehzahlunterschied zwischen Synchronring und Kupplungskörper besteht, ist das Reibmoment an den Kegelreibflächen von Synchronring und Kupplungskörper größer als das Rückstellmoment durch die angeschrägten Zahnstirnflächen. Die Schiebemuffe ist deshalb gegen Durchschalten in den Kupplungskörper gesperrt.

Erst wenn der Drehzahlunterschied zwischen Synchronring und Kupplungskörper ausgeglichen und somit das Reibmoment aufgehoben ist, dreht die Schiebemuffe den Synchronring in die Stellung "Zahn auf Zahnlücke" zurück. Über die Sperrverzahnung des Synchronringes hinweg wird dann die Schiebemuffe in die ebenfalls stirnseitig angeschrägte Verzahnung des Kupplungskörpers eingeschoben.

An dieser bekannten Synchronisiereinrichtung besteht hinsichtlich Funktion und Herstellkosten erheblicher Verbesserungsbedarf. Verbessert werden muß insbesondere auch der hohe Schaltkraftbedarf bei niedrigen Gangstufen und das unbefriedigende Schaltgefühl, das sich in einer gewissen Hakeligkeit beim Schaltvorgang, einer unbefriedigenden Entsperrhemmung und in Kraftspitzen beim Einspuren bemerkbar macht. Es bestehen Kraftspitzen nach dem Synchronisieren, allgemein als "2. Punkt" bezeichnet, die verursacht werden durch den Aufbau einer Differenzdrehzahl in der Freiflugphase bzw. einem Stoßvorgang beim Auftreffen der Verzahnungen, verbunden mit einem großen Trägheitsmoment. Sie wirken sich als Beschleunigungen am Schalthebel aus. Ebenfalls weist die Synchronisierung bekannter Bauart einen großen Bedarf an Bauraum auf. Bestehenden Ansprüchen nach Verkleinerungen und nach geringerem Gewicht wird dies nicht mehr gerecht.

Die gebräuchlichen Synchronisiereinrichtungen stellen die drei Grundfunktionen
- beliebig oft schließbares und lösbares Verbinden zweier um eine gemeinsame Achse rotierender Bauteile,
- Energieübertragung auf bzw. Energieabführung von einem rotierenden Bauteil (Beschleunigen, Abbremsen),
- Drehzahldifferenz zwischen zwei um eine gemeinsame Achse drehenden Bauteile auf einen Wert gleich oder nahe Null einregeln
zur Verfügung.

Betrachtet man einen Schaltvorgang der bekannten Synchronisiereinrichtung hinsichtlich des negativen Einflusses auf das Schaltgefühl, fallen insbesondere die Phasen nach dem Erreichen des Synchronlaufes auf.

Das Aufheben der Sperrstellung ist nur unter Krafteinsatz am Schalthebel durch Verdrehen der freien Drehmassen um eine halbe Zahnteilung der Kupplungsverzahnung möglich. Der Synchronring ist durch die Wahl von Konuswinkel und Sperrverzahnungsgeometrie als sperrsicher ausgelegt. Dem an der Sperrverzahnung anliegenden Entsperrmoment wirkt über den Reibkonus ein gleich großes Reaktionsmoment der trägen Drehmassen entgegen und verhindert somit ein separates Verdrehen des Ringes relativ zu den freien Drehmassen. Erst in der "Freiflugphase", zwischen Entsperren und Aufeinandertreffen der Kupplungsverzahnung, sollte sich der Synchronring vom Reibkonus gelöst haben. Ein Anhaften würde beim Einspuren der Kupplungsverzahnung ein Losbrechen des Ringes und damit zusätzlichen Kraftbedarf verursachen.

Nachteile ergeben sich bei hohen Schleppmomenten an den freien Drehmassen des Getriebes durch die fehlende Momentübertragung in der "Freiflugphase". Während der kurzen Zeitspanne ohne Momentübertragung zwischen den zu koppelnden Drehmassen baut sich erneut eine Drehzahldifferenz auf. Entsprechend harte Stoß- und damit Abweiskräfte machen sich beim Aufeinandertreffen der Kupplungsverzahnung am Schalthebel unangenehm bemerkbar.

Es ist Aufgabe der vorliegenden Erfindung, für Getriebeschaltungen mit Synchronisiereinrichtungen bei geringen Schaltwegen und geringen Schaltkräften ein verbessertes Schaltgefühl bei einem gleichmäßigen Schaltkraftverlauf zu erzielen. Die Aufgabe wird erfüllt durch eine Getriebeschaltung mit dem Merkmal von Anspruch 1. Ausgestaltungen sind Gegenstand von Unteransprüchen.

Um eine Verbesserung der bestehenden Unzulänglichkeiten zu erreichen, wird zunächst die Sperreinrichtung, die ein formschlüssiges Verbinden der Kupplungsverzahnung während der Synchronisierphase verhindert, von der Kupplungsverzahnung räumlich getrennt.

Die Kupplungsverzahnungen der bekannten Synchronisiereinrichtungen weisen Anschrägungen auf, die den Einspurvorgang ermöglichen sollen. Da in der Einspurphase die Stellung der Zähne von Schiebemuffe und Kupplungskörper zueinander zufällig ist, muß die freie Drehmasse im Getriebe vor dem formschlüssigen Verbinden so verdreht werden, daß die Kupplungsverzahnung in die geeignete Position zum Einspuren gelangt.

Im Gegensatz dazu weist die erfindungsgemäß vorgeschlagene Kupplungsverzahnung keinerlei Anschrägungen auf. Die Wahrscheinlichkeit, daß die Zähne von Schiebemuffe und Kupplungskörper in einer einpurfähigen Position voreinander stehen, ist sehr gering und wird durch die fehlenden Anschrägungen auch nicht gefördert. Um dem schaltenden Fahrzeugführer trotzdem den Eindruck zu vermitteln, daß der Schaltvorgang wie gewohnt abläuft, ist die Kupplungsverzahnung angefedert und kann dem axialen Schaltdruck ausweichen. In der Schaltendposition kann der Schaltmechanismus durch eine Rastvorrichtung arretiert werden, so daß die gespannte Feder auch nach Loslassen des Schalthebels durch den Fahrer und Wegfall des axialen Schaltdruckes gespannt bleibt.

Die Stirnflächen der für die Drehmomentübertragung vorgesehenen Kupplungsverzahnung stehen somit nach Ende des Schaltvorganges durch den Fahrer mit hoher Wahrscheinlichkeit unter Vorspannung der Feder aufeinander.

Ist es zufällig bereits zu einem Einspuren gekommen, so ist der Schaltvorgang insgesamt abgeschlossen. Andernfalls wird im Zustand des verspannten Aufeinanderstehens der Verzahnungen die Fahrzeugkupplung geschlossen und das sich aufbauende Drehmoment verdreht die Verzahnungen gegeneinander. Es kommt dann zum Einspuren der Verzahnungen und die Schaltung ist abgeschlossen. Auch durch Schleppmomente am Radsatz des Getriebes ist ein vorzeitiges Verdrehen der Verzahnungen gegeneinander und ein anschließendes Einspuren möglich.

Durch den Wegfall der Einspurschrägen an den Kupplungsverzahnungen verkürzt sich der Schaltweg im Vergleich zu den bekannten Synchronisiereinrichtungen. Dieser Weggewinn kann zu einer Vergrößerung der Übersetzung zwischen Schalthebel und Kupplungsverzahnung genutzt werden. Dadurch läßt sich die erforderliche Schaftkraft deutlich verringern.

Die Erfindung wird anhand von Figuren näher erläutert.
Es zeigen:
- Fig. 1: den grundsätzlichen Ablauf eines Schaltvorganges nach Stand der Technik;
- Fig. 2: den grundsätzlichen Ablauf eines Schaltvorganges nach der Erfindung;
- Fig. 3: in drei Stufen einen Sperr- und Einspurvorgang nach Stand der Technik;
- Fig. 4: in vier Stufen einen Sperr- und Einspurvorgang nach der Erfindung und
- Fig. 5: eine Darstellung des Schaltkraftverlaufs.

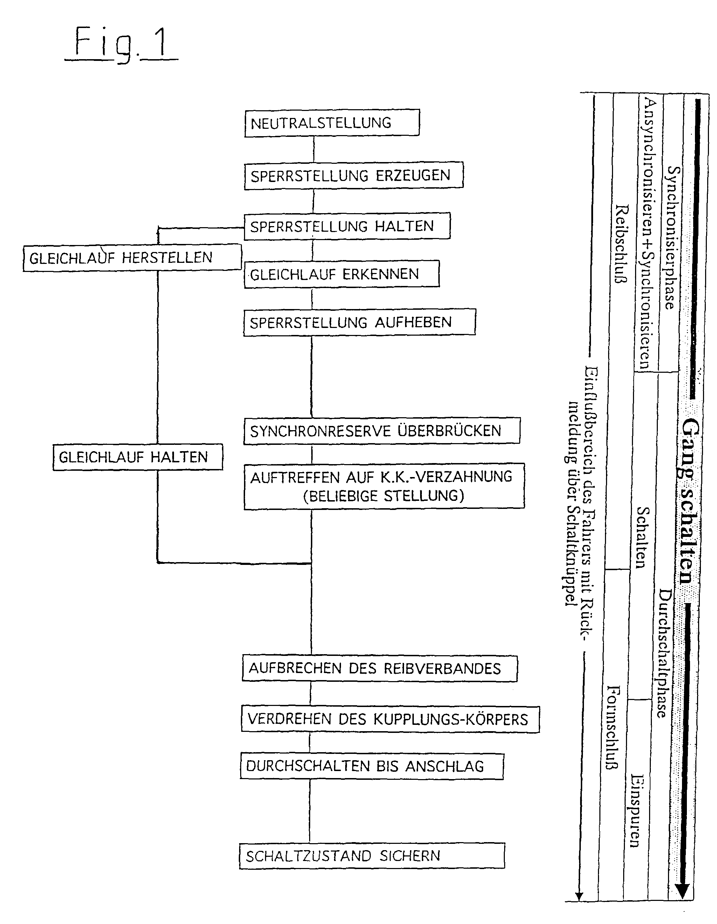

In der Fig. 1 wird der grundsätzliche Ablauf eines bekannten Schaltvorganges dargestellt.

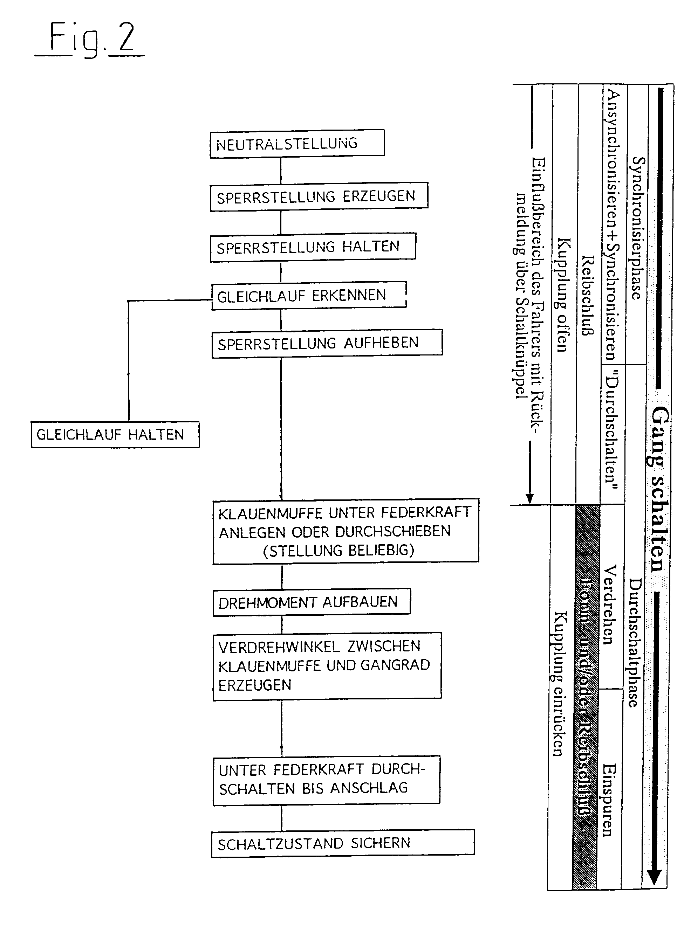

Die veränderte Darstellung des Schaltvorganges mit einer erfindungsgemäßen Synchronisiervorrichtung zeigt die Fig. 2.

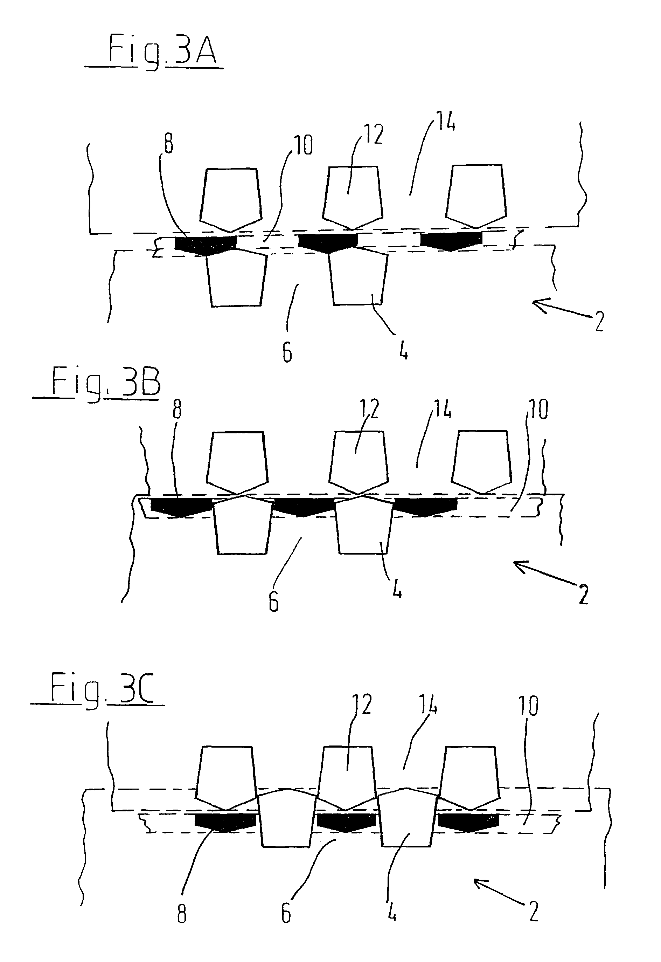

Die Fig. 3 zeigt schematisch den prinzipiellen Sperr- und Einspurvorgang an bekannten Synchronisiereinichtungen. Dargestellt sind Teile einer Synchronisiereinrichtung 2. Die Verzahnungen 4 einer Schiebemuffe 6 stehen den Verzahnungen 8 eines Synchronringes 10 und den Verzahnungen 12 eines Kupplungskörpers 14 gegenüber. In der Sperrstellung in Fig. 3A hat die Schiebemuffe 6 zunächst den Synchronring 10 gegen den Kupplungskörper 14 geschoben. Die Zahnstirnflächen der Verzahnungen 4, 8 haben damit die Weiterleitung der Schaltkraft von der Schiebemuffe 6 direkt an den Synchronring 10 übernommen. Solange ein Drehzahlunterschied zwischen Synchronring 10 und Kupplungskörper 14 besteht, ist das Reibmoment an den hier nicht gezeigten Kegelreibflächen von Synchronring 10 und Kupplungskörper 14 größer als das Rückstellmoment durch die angeschrägten Zahnstirnflächen der Verzahnungen 4, 8. Die Schiebemuffe 6 ist deshalb gegen Durchschalten in den Kupplungskörper 14 hinein gesperrt.

Erst wenn der Drehzahlunterschied zwischen Synchronring 10 und Kupplungskörper 14 ausgeglichen und somit das Reibmoment aufgehoben ist, dreht die Schiebemuffe 6 den Synchronring 10 in die Stellung "Zahn auf Zahnlücke" zurück. Die Verzahnungen 4 der Schiebemuffe 6 und die Verzahnungen 12 des Kupplungskörpers 14 kommen dabei in Kontakt (Fig. 3B). Über deren angeschrägte Stirnflächen werden die freien Drehmassen verdreht und über die Verzahnung 8 des Synchronringes 10 hinweg wird die Schiebemuffe 6 in die ebenfalls stirnseitig angeschrägte Verzahnung 12 des Kupplungskörpers 14 eingeschoben (Fig. 3C).

Betrachtet man die Vorgänge an den Verzahnungen 4, 8, 12 beim Schalten von der Neutralstellung bis zum eingelegten Gang, so wird deutlich, daß ein Anteil von einigen Millimetern am gesamten Schaltweg für die Bereitstellung der Einspuranspitzung an den momentenübertragenden Verzahnungen 4, 12 vorrätig gehalten wird. Funktional gesehen bedeutet dies, daß der Schaltweg durch einen Vorgang verlängert wird, dessen Ablauf nicht nur unbefriedigend, sondern auch im Sinne der Grundfunktion als untergeordnet anzusehen ist.

Dieser Schaltwegabschnitt wird zugunsten der Übersetzung zwischen Schalthebel und Schiebemuffe mit resultierender Schaltkraftreduzierung bzw. Schaltwegverkürzung eingespart.

Die erfindungsgemäß vorgeschlagene Synchronisiereinrichtung basiert darauf, daß nach Abschluß der Schaltbewegung am Schalthebel der zugehörige Gang nicht formschlüssig eingelegt sein muß. Die nach dem Synchronvorgang zufällig zueinander positionierten Drehmassen des Getriebes brauchen somit nicht in eine Einspurposition gezwungen zu werden.

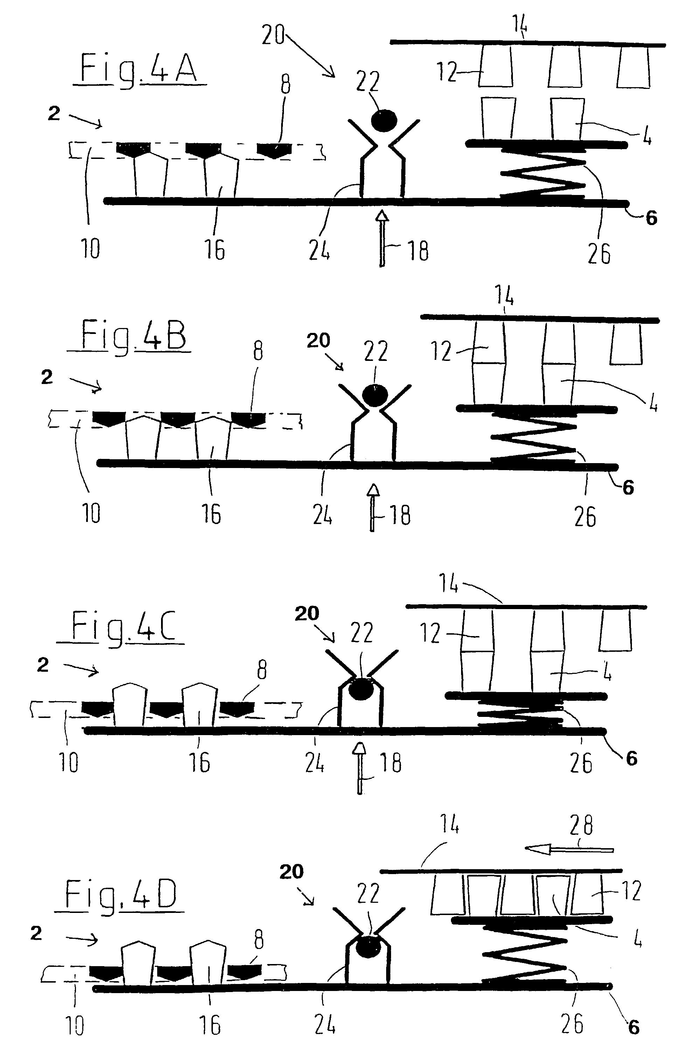

Den prinzipiellen Ablauf eines Schaltvorganges nach der erfindungsgemäßen Synchronisiereinrichtung zeigt Fig. 4. Während des Schaltvorganges bleiben die Phasen des Sperrens und Entsperrens gegenüber den bekannten Synchronisiereinrichtungen unverändert.

Die Sperrverzahnung einer Synchronisiereinrichtung 2 besteht aus der Verzahnung 8 des Synchronringes 10 und der Verzahnung 16 der Schiebemuffe 6. Die Sperrverzahnung ist als eigenständige Funktionseinheit ausgeführt und kann unabhängig von der Kupplungsverzahnung angeordnet werden. Die Kupplungsverzahnung wird gebildet aus der Verzahnung 4 der Schiebemuffe 6 und der Verzahnung 12 des Kupplungskörpers 14. Durch diese funktionale Trennung kann vorteilhafterweise die Sperrverzahnung zweckoptimal ausgenutzt werden und der Einfluß von Reibkonus- und Wirkdurchmesser der Verzahnung auf die Sperrsicherheit genutzt werden.

Auch hier hat die Schiebemuffe 6 in der Sperrstellung (Fig. 4A) zunächst den Synchronring 10 durch die ausgeübte Schaltkraft 18 auf einen nicht gezeigten Gegenkonus des Kupplungskörpers 14 geschoben. Dabei haben die Blockierflächen der Verzahnungen 16 und 8 die Weiterleitung der Schaltkraft 18 von der Schiebemuffe 6 direkt an den Synchronring 10 übernommen. Solange ein Drehzahlunterschied zwischen Synchronring 10 und Kupplungskörper 14 besteht, ist das Reibmoment an den auch hier nicht gezeigten Kegelreibflächen von Synchronring 10 und Kupplungskörper 14 größer als das Rückstellmoment durch die angeschrägten Blockierflächen der Verzahnungen 16 und 8. Die Schiebemuffe 6 ist deshalb gegen Durchschalten in den Kupplungskörper 14 hinein gesperrt.

Erst wenn der Drehzahlunterschied zwischen Synchronring 10 und Kupplungskörper 14 ausgeglichen und somit das Reibmoment aufgehoben ist, dreht die Schiebemuffe 6 den Synchronring 10 über die Zahnstirnflächen der Verzahnungen 16 und 8 in die Stellung "Zahn auf Zahnlücke" zurück (Fig. 4B). Die Verzahnungen 4 der Schiebemuffe 6 und die Verzahnungen 12 des Kupplungskörpers 14 kommen dabei in Kontakt. Jetzt ergeben sich Änderungen zum bekannten Schaltablauf. Die Kupplungsverzahnung mit den Verzahnungen 4 der Schiebemuffe 6 und Verzahnungen 12 des Kupplungskörpers 14 weist keine Anspitzung auf, so daß ein direktes Einspuren der Verzahnungen 4 und 12 ineinander unwahrscheinlich ist.

Um trotzdem den Schaltvorgang abzuschließen, wird die Kupplungsverzahnung durch ein Federungselement 26 angefedert und durch die vom Fahrer ausgeübte Schaltkraft 18 gespannt. Ein Rastmechanismus 20 sorgt dafür, daß die Kupplungsverzahnung im verspannten Zustand verharrt, sobald der Schalthebel am Ende der Schaltbewegung losgelassen wird (Fig. 4C). Der Rastmechanismus 20 könnte dabei so aufgebaut sein, daß ein Element 22 am Kupplungskörper 14 angeordnet ist, während ein zweites Element 24 an der Schiebemuffe 6 vorgesehen ist. Die beiden Elemente 22 und 24 könnten dabei angefedert ineinandergreifen. Auch jede andere Form der Rastierung ist hier denkbar.

Für den Fahrer ist damit die Schaltung des Ganges abgeschlossen und das Gefühl des Durchschaltens bleibt für ihn somit erhalten. Auch eine eventuell entstandene Differenzdrehzahl führt aufgrund der fehlenden Zahnanspitzungen beim Einspuren nicht mehr zu Abweiskräften, die vom Fahrer registriert werden können.

Die Stirnflächen der für die Drehmomentübertragung vorgesehenen Verzahnungen 4 und 12 der Kupplungsverzahnung stehen nach Ende des Schaltvorganges durch den Fahrer mit hoher Wahrscheinlichkeit unter Vorspannung des Federelementes 26 aufeinander. Ist es zufällig bereits zu einem Einspuren gekommen, so ist der Schaltvorgang insgesamt abgeschlossen. Andernfalls wird im Zustand des verspannten Aufeinanderstehens der Verzahnungen 4 und 12 die hier nicht gezeigte Fahrzeugkupplung geschlossen und das sich aufbauende Kupplungsmoment 28 verdreht die Verzahnungen 4 und 12 gegeneinander. Auch durch Schleppmomente am Radsatz des Getriebes ist ein vorzeitiges Verdrehen der Verzahnungen gegeneinander möglich. Es kommt zum Einspuren der Verzahnungen 4 und 12 ineinander und die Schaltung ist abgeschlossen (Fig. 4D).

Wird ein direktes Einspuren der Kupplungsverzahnung ineinander erreicht oder läßt sich das Einspuren so schnell vornehmen, daß keine Rastierung notwendig ist, weil die Schaltkraft noch ansteht, so kann auf einen Rastmechanismus verzichtet werden. Die vorliegenden Schleppmomente in einer Getriebeschaltung ermöglichen häufig dieses direkte Einspuren. Reichen die Schleppmomente nicht aus, so ist die Rastvorrichtung erforderlich, da die Schaltkraft, sofern sie durch den Fahrer ausgeübt wird, nicht mehr ansteht und das Einspuren erst mit dem Einrücken der Kupplung erfolgt. Wird die Schaltung beispielsweise nicht von einem Fahrer per Schaltgestänge von Hand ausgeführt, so ist auch die Alternative einer automatischen Schaltung durch Schaltmittel möglich, die vom Fahrer fernbetätigt werden. Dabei kann die Fernbetätigung auch unter Zwischenschaltung einer logischen Steuerung geschehen, die Einfluß auf die schaltbaren Gangstufen nimmt. Unbeeinflußt durch den Fahrer kann eine Automatik auch die gesamte Schaltung des Schaltgetriebes übernehmen, wobei vorzugsweise immer in den optimalen Bereichen geschaltet wird. Als Schaltmittel kommen überwiegend pneumatisch betätigte Schaltmittel zum Einsatz.

Das Federungselement 26 kann jedes elastische Element sein, das in der Lage ist, die mit Hilfe der Schaltkraft eingeleitete Energie aufzunehmen. Dieses elastische Element muß sich dabei nicht in unmittelbarer Nähe der Synchronisiereinrichtung befinden. Möglich ist auch, daß das elastische Element Bestandteil des Schaltgestänges ist oder an diesem angeordnet ist. Als elastische Elemente kommen beispielsweise Federscheiben, Wellenscheiben, Luftfedern, Torsionsfedern, Gummielemente etc. in Betracht. Die Torsionsfedern können dabei so ausgelegt sein, daß sie auf die Kupplungsverzahnung nicht nur eine axiale Anfederung vornehmen, sondern gleichzeitig auch ein Verdrehen der Kupplungsverzahnung vornehmen.

Zur Vermeidung von Rasselgeräuschen im Getriebe können die elastischen Elemente unter einer bestimmten Vorspannung gehalten werden, die ein ungewolltes freies Spiel der Synchronisiereinrichtungselemente vermeidet. Die Federkennlinien der elastischen Elemente können einen degressiven Verlauf aufweisen.

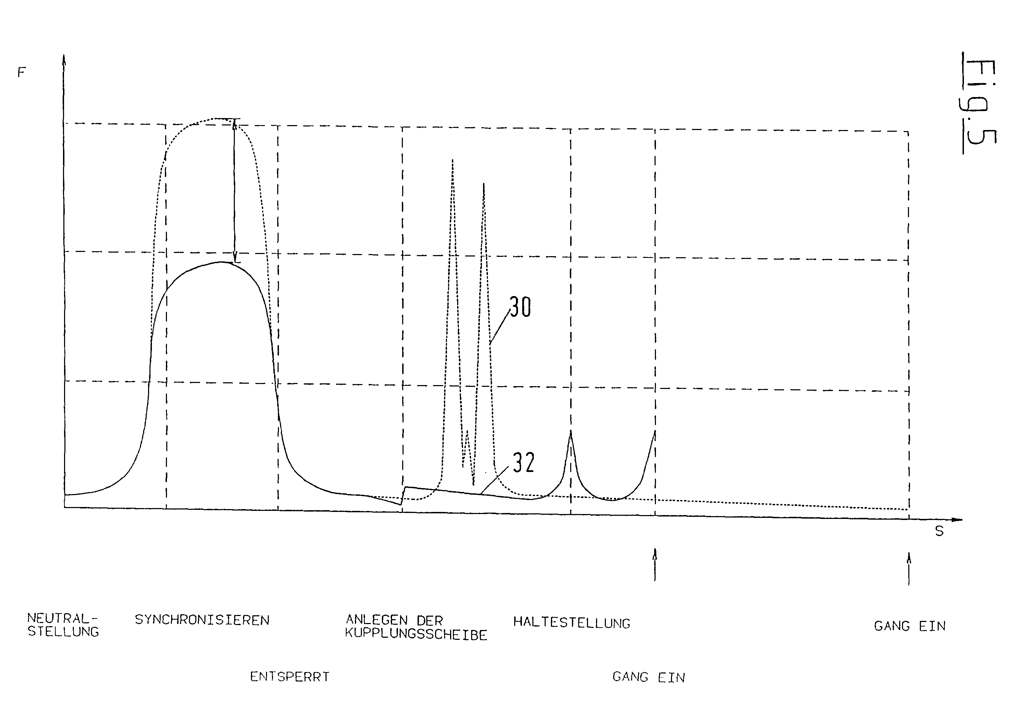

Die Fig. 5 zeigt den Verlauf der Schaltkraft, aufgetragen über dem Schaltweg im Vergleich von bekannter 30 und erfindungsgemäßer Synchronisiervorrichtung 32.

Deutlich ist zunächst zu erkennen, daß die Schaltung der erfindungsgemäßen Synchronisiervorrichtung mit einem erheblich geringeren Schaltweg abgeschlossen ist.

Auch die Schaltkräfte fallen unterschiedlich aus. Die erforderliche Schaltkraft der erfindungsgemäßen Synchronisierungseinrichtung ist deutlich niedriger als bisher. Die Schaltkraftspitzen im Verlauf der bekannten Synchronisierungseinrichtung entstehen durch das Auftreffen der Kupplungsverzahnung aufeinander und durch das Verdrehen des Kupplungskörpers. Diese Elemente beeinträchtigen bei dem erfindungsgemäßen Konzept das Schaltverhalten für den Fahrer nicht. Das leichte Ansteigen der Schaltkraft im Verlauf ist auf das Einrasten der Rastvorrichtung zurückzuführen, es ist im Vergleich zu bisherigen Schaltkraftspitzen aber vernachlässigbar. Der Verlauf der Schaltkraft ist nur als beispielhaft für die Verwendung der Erfindung zu betrachten.

Die Erfindung erschöpft sich nicht in den hier aufgeführten Anordnungen. Sie beinhaltet auch alle dem Fachmann auf diesem Sachgebiet geläufigen Abwandlungen, die im Rahmen der Ansprüche liegen.

### Bezugszeichen

- 2: Synchronisiereinrichtung
- 4: Verzahnung
- 6: Schiebemuffe
- 8: Verzahnung
- 10: Synchronring
- 12: Verzahnung
- 14: Kupplungskörper
- 16: Verzahnung
- 18: Schaltkraft
- 20: Rastvorichtung
- 22: Element der Rastvorrichtung
- 24: Element der Rastvorrichtung
- 26: Federelement
- 28: Kupplungsmoment
- 30: Schaltkraftverlauf bekannter Synchronisierung
- 32: Schaltkraftverlauf erfindungsgemäßer Synchronisierung

## Patentansprüche

1. Getriebeschaltung mit Sperrsynchronisierung (2), bei welcher eine Drehwelle und ein mit unterschiedlicher Drehzahl rotierendes Zahnrad mit Hilfe einer durch eine Schaltkraft axial verschiebbaren, ringförmigen Schiebemuffe (6) bei Gleichlauf formschlüssig kuppelbar ist, wobei eine Kupplungsverzahnung (4) der Schiebemuffe (6) in eine entsprechende Kupplungsverzahnung (12) des Zahnrades oder eines mit dem Zahnrad verbundenen Kupplungskörpers (14) eingreift und einem zwischen Schiebemuffe (6) und Zahnrad angeordneten Synchronring (10), wobei Teile des Zahnrades oder des Kupplungskörpers (14) mit Teilen des Synchronringes (10) gemeinsam eine kraftschlüssige Kupplung bilden und bei Nichtsynchronismus über Blockierungsflächen einer Sperreinrichtung (4, 8) die axiale Bewegung der Schiebemuffe (6) gesperrt wird, dadurch **gekennzeichnet**, daß die Kupplungsverzahnung (4, 12) und die Sperreinrichtung (8, 16) voneinander getrennt sind, die Kupplungsverzahnung (4) der Schiebemuffe (6) und die Kupplungsverzahnung (12) des Zahnrades oder Kupplungskörpers (14) stumpf ausgebildete Enden aufweisen, wenigstens ein elastisches Element (26) zur Anfederung der Kupplungsverzahnung (4, 12) vorgesehen ist.

2. Getriebeschaltung mit Sperrsynchronisierung nach Anspruch 1, dadurch **gekennzeichnet,** daß eine Rastvorrichtung (20) vorgesehen ist, die die Schiebemuffe (6) nach Wegfall der Schaltkraft (18) gegen die Kraft des elastischen Elements (26) festhält.

3. Getriebeschaltung mit Sperrsynchronisierung nach Anspruch 1 oder 2, dadurch **gekennzeichnet**, daß die Schaltkraft (18) durch Schaltmittel aufgebracht wird.

4. Getriebeschaltung mit Sperrsynchronisierung nach Anspruch 3, dadurch **gekennzeichnet,** daß die Ansteuerung der Schaltmittel automatisch erfolgt.

5. Getriebeschaltung mit Sperrsynchronisierung nach einem der vorherigen Ansprüche, dadurch **gekennzeichnet,** daß die elastischen Elemente (26) unter Vorspannung stehen.

6. Getriebeschaltung mit Sperrsynchronisierung ach einem der vorherigen Ansprüche, dadurch **gekennzeichnet,** daß die elastischen Elemente (26) Federn sind.

7. Getriebeschaltung mit Sperrsynchronisierung nach Anspruch 6, dadurch **gekennzeichnet,** daß die Feder eine Torsionsfeder ist, die in axialer Richtung und in Umfangsrichtung wirkt.

8. Getriebeschaltung mit Sperrsynchronisierung nach einem der vorherigen Ansprüche, dadurch **gekennzeichnet,** daß die Kupplungsverzahnung (4) der Schiebemuffe (6) durch wenigstens das elastische Element (26) angefedert ist.

9. Getriebeschaltung mit Sperrsynchronisierung nach einem der Ansprüche 1 bis 7, dadurch **gekennzeichnet,** daß die Kupplungsverzahnung (12) des Zahnrades oder Kupplungskörpers (14) durch wenigstens das elastische Element (26) angefedert ist.

10. Getriebeschaltung mit Sperrsynchronisierung nach einem der vorherigen Ansprüche, dadurch **gekennzeichnet ,** daß die Kupplungsverzahnungen (4, 8, 12, 16) oder Teile davon hinterlegt sind.

## Claims

1. Gear shift system with a locking synchronizer (2), in which a rotary shaft and a gear rotating at different speeds can be positively coupled at synchronous speed by means of an annular sliding sleeve (6) axially slideable by a shifting force, with dog teeth (4) of the sliding sleeve (6) engaging with corresponding dog teeth (12) of the gear or with a clutch body (14) connected to the gear and with a synchronizer ring (10) arranged between the sliding sleeve (6) and the gear, with parts of the gear or of the clutch body (14) jointly forming a force locking or friction-type connection with parts of the synchronizer ring (10), and the axial movement of the sliding sleeve (6) being blocked by the blocking faces of a blocking device (4, 8) in case of non-synchronization, **characterized** in that the dog teeth (4, 12) and the locking device (8, 16) are separated from each other, that the dog teeth (4) of the sliding sleeve (6) and the dog teeth (12) of the gear or the clutch body (14) have obtuse ends, and that at least one flexible element (26) is provided as a biasing device for the dog teeth (4, 12).

2. Gear shift system with a locking synchronizer according to claim 1, **characterized** in that a detent (20) is prcvided to hold the sliding sleeve (6) against the force of the flexible element (26) when gear shift force (18) ceases to be applied.

3. Gear shift system with a locking synchronizer according to claims 1 or 2, **characterized** in that that the gear shift force (18) is provided by shifting means.

4. Gear shift system with a locking synchronizer according to claim 3, **characterized** in that the control of the shifting means is effected automatically.

5. Gear shift system with a locking synchronizer according to one of the preceding claims, **characterized** in that that the flexible elements (26) are subjected to preload.

6. Gear shift system with a locking synchronizer according to one of the preceding claims, **characterized** in that the flexible elements (26) take the form of springs.

7. Gear shift system with a locking synchronizer according to claim 6, **characterized** in that the spring is a torsion spring acting in axial and in circumferential direction.

8. Gear shift system with a locking synchronizer according to one of the preceding claims, **characterized** in that the dog teeth (4) of the sliding sleeve (6) are spring-biased at least by the flexible element (26).

9. Gear shift system with a locking synchronizer according to one of the claims 1 to 7, **characterized** in that the dog teeth (12) of the gear or the clutch body (14) are spring-loaded at least by the flexible element (26).

10. Gear shift system with a locking synchronizer according to one of the preceding claims, **characterized** in that the dog teeth (4, 8, 12, 16) or parts of them are undercut.

## Revendications

1. Mécanisme de changement de vitesse avec synchronisation de blocage (2), dans lequel un arbre rotatif peut être craboté en cas de marche synchrone avec une roue dentée tournant à une vitesse de rotation différente à l'aide d'un manchon annulaire (6) coulissant axialement grâce à une force de commande, une denture d'embrayage (4) du manchon coulissant (6) s'engrenant dans une denture d'embrayage (12) correspondante de la roue dentée ou d'un corps d'accouplement (14) relié à la roue dentée, et d'une bague de synchronisation (10) agencée entre le manchon coulissant (6) et la roue dentée, des parties de la roue dentée ou du corps d'accouplement (14) formant ensemble avec des parties de la bague de synchronisation (10) un accouplement de force, et en cas de non-synchronisation, le mouvement axial du manchon coulissant (6) étant bloqué au moyen de surfaces de blocage d'un dispositif de blocage (4, 8), **caractérisé** en ce que la denture d'accouplement (4, 12) et le dispositif de blocage (8, 16) sont séparés l'une de l'autre, et en ce que la denture d'accouplement (4) du manchon coulissant (6) et la denture d'accouplement (12) de la roue dentée ou du corps d'accouplement (14) ont des extrémités de forme tronquée, au moins un élément élastique (26) pour l'élasticité de la denture d'accouplement (4, 12) étant prévu.

2. Mécanisme de changement de vitesse avec synchronisation de blocage selon la revendication 1, **caractérisé** en ce qu'un dispositif à crans (20) est prévu de façon à retenir le manchon coulissant (6) après suppression de la force de commande (18) contre la force de l'élément élastique (26).

3. Mécanisme de changement de vitesse avec synchronisation de blocage selon la revendication 1 ou 2, **caractérisé** en ce que la force de commande (18) est appliquée par des dispositifs d'embrayage.

4. Mécanisme de changement de vitesse avec synchronisation de blocage selon la revendication 3, **caractérisé** en ce que l'activation des dispositifs d'embrayage est effectuée automatiquement.

5. Mécanisme de changement de vitesse avec synchronisation de blocage selon l'une des revendications précédentes, **caractérisé** en ce que les éléments élastiques (26) sont précontraints.

6. Mécanisme de changement de vitesse avec synchronisation de blocage selon l'une des revendications précédentes, **caractérisé** en ce que les éléments élastiques (26) sont des ressorts.

7. Mécanisme de changement de vitesse avec synchronisation de blocage selon la revendication 6, **caractérisé** en ce que le ressort est un ressort de torsion agissant dans le sens axial et dans les sens circonférentiel.

8. Mécanisme de changement de vitesse avec synchronisation de blocage selon l'une des revendications précédentes, **caractérisé** en ce que la denture d'accouplement (4) du manchon coulissant (6) est commandée au moins par l'élément élastique (26).

9. Mécanisme de changement de vitesse avec synchronisation de blocage selon l'une des revendications de 1 à 7, **caractérisé** en ce que la denture d'accouplement (12) de la roue dentée ou du corps d'accouplement (14) est actionné au moins par l'élément élastique (26).

10. Mécanisme de changement de vitesse avec synchronisation de blocage selon l'une des revendications précédentes, **caractérisé** en ce que la denture d'accouplement (4, 8, 12, 16) ou des composants de celle-ci est doublée.
